# EUROPEAN PATENT SPECIFICATION

(11) **EP 2 488 796 B1**
(45) Date of publication and mention of the grant of the patent: **12.12.2018**
(21) Application number: 10823857.7
(22) Date of filing: 07.10.2010
(51) Int. Cl.: F24F 11/00, F24F 3/14, F25B 41/06

(54) **DEHUMIDIFICATION CONTROL IN REFRIGERANT VAPOR COMPRESSION SYSTEMS**
ENTFEUCHTUNGSSTEUERUNG IN KÜHLMITTLEDAMPF-KOMPRESSIONSSYSTEMEN
COMMANDE DE DÉSHUMIDIFICATION DANS DES SYSTÈMES DE COMPRESSION DE VAPEUR DE FLUIDE FRIGORIGÈNE

(30) Priority: 14.10.2009 US 251462 P
(43) Date of publication of application: 22.08.2012
(73) Proprietor: Carrier Corporation, Farmington, CT 06034 (US)
(72) Inventor: NG, Swee Meng, Singapore 529891 (SG); JOHNSEN, Martin, O., Jamesville New York 13078 (US); SENF, Raymond, L., Jr., Central Square New York 13036 (US)
(74) Representative: Dehns
(86) International application number: PCT/US2010/051802
(87) International publication number: WO 2011/046803

(56) References cited:
- EP-A1- 1 614 976
- WO-A1-2009/088517
- US-A1- 2002 029 580
- US-A1- 2005 217 133
- US-A1- 2005 235 666
- US-A1- 2005 235 666
- US-A1- 2006 026 976
- US-A1- 2008 235 977
- US-B1- 6 427 454

## Description

This invention relates generally to refrigerant vapor compression systems, such as refrigeration systems and air conditioning systems. More particularly, this invention relates to controlling the dehumidification of air or an air- gas mixture being conditioned for supply to a climate controlled space.

Refrigerant vapor compression systems are well known in the art and are commonly used for conditioning air to be supplied to a climate controlled space. For example, refrigerant vapor compression systems are used for conditioning air to be supplied to a climate controlled comfort zone within a residence, office building, hospital, school, restaurant or other facility. Refrigerant vapor compression systems are also used in refrigerating air supplied to display cases, merchandisers, freezer cabinets, cold rooms or other perishable/frozen product storage area in commercial establishments.

Refrigerant vapor compression systems are also commonly used in transport refrigeration systems for refrigerating air or an air-gas mixture supplied to a cargo storage space of a truck, trailer, container or the like for transporting perishable/frozen items by truck, rail, ship or intermodally. Refrigerant vapor compression systems used in connection with transport refrigeration systems are generally subject to more stringent operating conditions due to the wide range of operating load conditions and the wide range of outdoor ambient conditions over which the refrigerant vapor compression system must operate to maintain product within the cargo space at a desired temperature. The desired temperature and relative humidity within the cargo space at which the cargo needs to be controlled can also vary over a wide range depending on the nature of cargo to be preserved. Consequently, in transport refrigeration systems, it is desirable that the refrigerant vapor compression system be capable of controlling relative humidity to a desired level for the perishable product being shipped, typically in the range of from about 50 % relative humidity to about 75%RH, over a wide range of product transport temperatures, for example from -5°C (23 F) to 25°C (77°F). At the high end of temperature range, the control of relative humidity to the desired low levels becomes more challenging.

WO 2009/088517 A1 discloses a refrigerant system provided with a control for its expansion device; the control operates the expansion device to adjust the superheat of the refrigerant leaving an evaporator to have desired dehumidification for air being delivered into an environment to be condition.

A method is provided for controlling dehumidification of an airflow to be conditioned for supply to a climate controlled space. The method includes the steps of: passing the airflow to be conditioned over a plurality of refrigerant conveying conduits of an evaporator of a refrigerant vapor compression thereby cooling the airflow; operating the refrigeration vapor compression system to maintain the airflow at a set point air temperature indicative of a desired temperature within the climate controlled space; and adjusting the evaporator expansion device so as to reduce the temperature of the refrigerant within the refrigerant conveying conduits of the evaporator whenever further dehumidification of the air flow to be conditioned is desired. The step of operating the refrigerant vapor compression system to maintain said airflow at a set point air temperature indicative of a desired temperature within the climate controlled space includes the step of reheating said airflow having passed over the plurality of refrigerant conveying conduits of the evaporator prior to supplying said airflow to the climate controlled space. The step of adjusting the evaporator expansion device so as to reduce the temperature of the refrigerant within the refrigerant conveying conduits of the evaporator may be implemented if a sensed relative humidity reflective of the relative humidity within the climate controlled space exceeds a desired set point relative humidity. The set point relative humidity may lie in the range from a preselected relative humidity minus a preselected tolerance to the preselected relative humidity plus the preselected tolerance, inclusive of the end point relative humidities.

The step of adjusting the evaporator expansion device so as to reduce the temperature of the refrigerant within the refrigerant conveying conduits of the evaporator may include reducing a refrigerant flow area through the expansion device.

The step of adjusting the expansion device so as to reduce the temperature of the refrigerant within the refrigerant conveying conduits of the evaporator may include increasing a pressure drop in the refrigerant passing through the expansion device.

The step of adjusting the expansion device so as to reduce the temperature of the refrigerant within the refrigerant conveying conduits of the evaporator may include decreasing a flow rate of refrigerant passing through the expansion.

The step of adjusting the expansion device so as to reduce the temperature of the refrigerant within the refrigerant conveying conduits of the evaporator may include setting a superheat setting of the expansion device to a maximum superheat setting.

An apparatus for supplying conditioned air to a climate controlled space includes a refrigerant vapor compression system including a compression device, a refrigerant heat rejection heat exchanger, an electronic expansion valve, and an evaporator heat exchanger arranged in series refrigerant flow relationship in accordance with a refrigerant vapor compression cycle; an evaporator fan for passing a flow of air to be conditioned over a plurality of refrigerant conveying conduits of the evaporator heat exchanger in heat exchange relationship with the refrigerant thereby cooling the airflow flow of air to be conditioned; and a controller operatively associated with the refrigerant vapor compression system. The controller is configured to operate the refrigeration vapor compression system to maintain the airflow at a set point air temperature indicative of a desired temperature within the climate controlled space, and to adjust the electronic expansion valve so as to reduce the temperature of the refrigerant within the refrigerant conveying conduits of the evaporator whenever further dehumidification of the air flow to be conditioned is desired. The apparatus further comprises a reheater for reheating said airflow having passed over the plurality of refrigerant conveying conduits of the evaporator prior to supplying said airflow to the climate controlled space. In an embodiment, the controller adjusts a superheat setting of the electronic expansion valve to a maximum superheat setting so as to reduce the temperature of the refrigerant within the refrigerant conveying conduits of the evaporator.

For a further understanding of the disclosure, reference will be made to the following detailed description of example embodiments, which is to be read in connection with the accompanying drawings, wherein
FIG. 1 is a schematic diagram illustrating an exemplary embodiment of a refrigerant vapor compression system operable in a low humidity control mode in accordance with the method of the invention;
FIG. 2 is a process flow chart illustrating an exemplary embodiment of a method of controlling dehumidification in accordance with the invention;
FIG. 3 is a schematic diagram illustrating an embodiment of an air flow bypass around the evaporator of the refrigerant vapor compression system of FIG. 1; and
FIG. 4 is a schematic diagram of an embodiment of the evaporator of FIG. 1 wherein the evaporator heat exchanger includes a pair of independent refrigerant flow circuits.

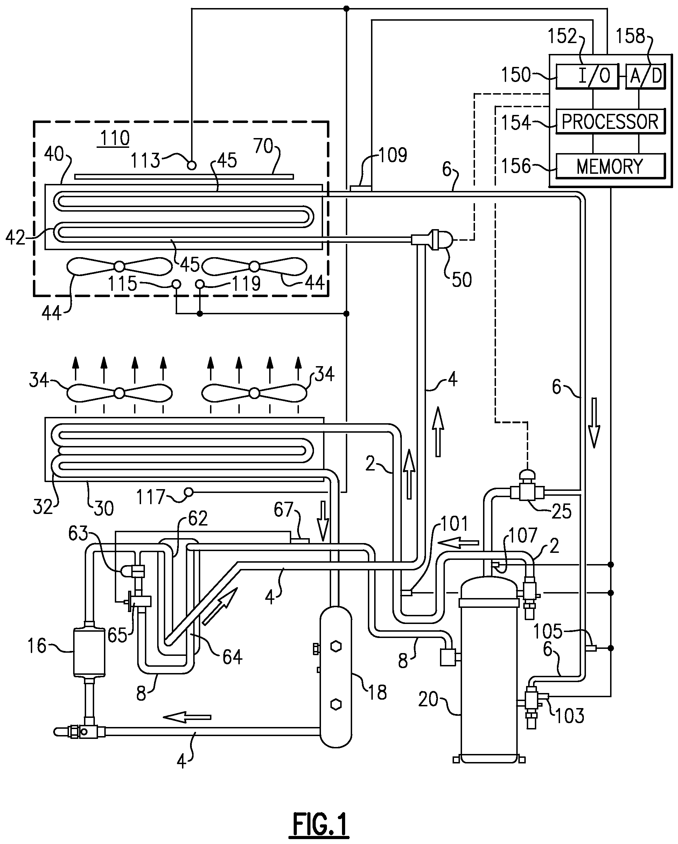

Referring initially to FIG. 1 of the drawing, there is depicted an exemplary embodiment of a refrigerant vapor compression system 100 for supplying conditioned air to a climate controlled space 110. Although the invention will be described herein with reference to the climate controlled space being the cargo storage space, commonly referred to as the "cargo box", of a truck, trailer, container or the like for transporting perishable/frozen items by truck, rail, ship or intermodally container, it is to be understood that the invention is also applicable to and be used in connection with dehumidification control in connection with refrigerant vapor compression systems on air conditioning systems used for conditioning air to be supplied to a climate controlled comfort zone within a
residence, office building, hospital, school, restaurant or other facility, and with refrigerant vapor compression systems on commercial refrigeration systems for refrigerating air within the product storage spaces of display cases, merchandisers, freezer cabinets, cold rooms or other perishable/frozen product storage areas in commercial establishments.

Additionally, as used throughout this application, the terms "air" and "airflow" are intended to include and refer to not only air, but also air-gas mixtures. For example, without limiting the scope of air-gas mixture, the terms "air" and "airflow" includes air-gas mixtures containing air and one or more of carbon dioxide gas, nitrogen gas, and ethylene gas. Such air-gas mixtures may be used in connection with establishing a desired controlled atmosphere within the cargo storage space of a container or the like for transporting certain perishable/frozen items by truck, rail, ship or intermodally container.

The refrigerant vapor compression system 100 includes a compressor 20, a condenser 30 including a condenser heat exchanger 32 and associated condenser fan(s) 34, an evaporator 40 including an evaporator heat exchanger 42 and associated evaporator fan(s) 44, and an expansion device 50 associated with the evaporator 40, connected in a refrigeration cycle in a conventional manner by refrigerant lines 2, 4 and 6, which collectively define a refrigerant flow circuit. As in conventional practice, refrigerant line 2 connects the discharge outlet of the compressor 20 in refrigerant flow communication with the inlet to the condenser heat exchanger 32, refrigerant line 4 connects the outlet of the condenser heat exchanger 32 in refrigerant flow communication with the inlet to the evaporator heat exchanger 42, and refrigerant line 6 connects the outlet of the evaporator heat exchanger 42 in refrigerant flow communication with the suction inlet of the compressor 20, thereby completing the primary refrigerant flow circuit. The expansion device 50 is disposed in refrigerant line 4 in operative association with and upstream with respect to refrigerant flow of the inlet to the evaporator heat exchanger 42. The expansion device 50 comprises an expansion device having a selectively variable flow area therethrough, such as an electronic expansion valve (EXV), whereby the amount of flow of refrigerant through the evaporator heat exchanger 42 may be controlled by selectively varying the flow area through the expansion device 50.

The compressor 20 is depicted in the exemplary embodiment as a scroll compressor. However, the compressor 20 may be a reciprocating compressor or other type of compressor, the particular type of compressor used not being germane to or limiting of the invention. In the depicted embodiment, each of the condenser heat exchanger 32 and the evaporator heat exchanger 42 comprises one or more refrigerant-conveying heat exchange tube coils formed of conventional round tubes. However, it is to be understood that either or both of the condenser heat exchanger 32 and the evaporator heat exchanger 42 may comprise other forms of heat exchangers such as for example a tube bank heat exchanger formed of one or more banks of flat, multiple flow channel, refrigerant-conveying tubes extending between an inlet header and an outlet header. The particular type of heat exchanger used for either of the condenser heat exchanger 32 or the evaporator heat exchanger 42 is not germane to or limiting of the invention.

As in conventional practice, the refrigerant vapor compression system 100 may also include a compressor unloader valve 25 disposed in a compressor unload refrigerant line 22 that connects the discharge chamber of the compressor 20 in refrigerant flow communication with the refrigerant line 6 between the outlet of the evaporator heat exchanger 42 and the suction inlet to the compressor 20. In addition, the refrigerant vapor compression system 100 may include other components such as, but not limited to, a filter/drier 16 and a receiver 18 disposed in refrigerant line 4 upstream with respect to refrigerant flow of the economizer 60.

The refrigerant vapor compression system 100 may, if desired, as in the embodiment depicted in FIG. 1, include an economizer circuit having an economizer 60, such as a refrigerant-to-refrigerant heat exchanger, an economizer circuit flow control valve 63, such as for example an open/closed solenoid valve, and an economizer expansion device 65, such as a thermostatic expansion valve (TXV) with associated refrigerant temperature sensing blub 67, as depicted in FIG. 1, or an electronic expansion valve (EXV) or a fixed orifice device. The refrigerant-to-refrigerant heat exchanger economizer 60 includes a first refrigerant pass 62 and a second refrigerant pass 64 arranged in heat transfer relationship. The first refrigerant pass 62 is interdisposed in refrigerant line 4 and forms part of the primary refrigerant circuit. The second refrigerant pass 64 is interdisposed in the economizer circuit refrigerant line 8 and forms part of an economizer circuit. The economizer circuit refrigerant line 8 taps into refrigerant line 4 of the primary refrigerant circuit upstream with respect to refrigerant flow of the economizer 60 and connects in refrigerant flow communication to an intermediate pressure stage of the compression process within the compressor 20. In the depicted embodiment, wherein the compressor 20 is a scroll compressor, the economizer line 8 connects to an intermediate pressure port on the scroll compressor 20 that opens into the compression chamber within the scroll compressor 20 whereby refrigerant passing through the economizer circuit refrigerant line 8 is injected directly into an intermediate compression stage of the compression process.

When the economizer circuit flow control valve 63 is open, refrigerant having traversed the condenser heat exchanger 32 passes from refrigerant line 4 into refrigerant line 8, thence through the economizer expansion device 65 wherein the refrigerant is expand to a lower pressure, lower temperature before passing through the second pass 64 of the refrigerant-to-refrigerant economizer heat exchanger 60. In traversing the second pass 64, the lower temperature refrigerant passes in heat exchange relationship with the higher temperature refrigerant passing through the first pass 62, whereby the refrigerant passing through the first pass 62 is cooled before passing on through refrigerant line 4 to the evaporator expansion device 50 and the refrigerant passing through the second pass 64 is heated and typically at least partially, if not fully, evaporated, before continuing through the economizer circuit refrigerant line 8 to be injected into an intermediate stage of the compression process. The first refrigerant pass 62 and the second refrigerant pass 64 of the refrigerant-to-refrigerant heat exchanger economizer 60 may be arranged in a counter flow heat exchange relationship, as depicted in FIG. 1, or in a parallel flow heat exchange relationship, as desired. The refrigerant-to-refrigerant heat exchanger 60 may be, for example but not limited to, a brazed plate heat exchanger, a tube-in-tube heat exchanger, a tube-on-tube heat exchanger or a shell-and-tube heat exchanger.

The refrigeration unit includes a controller 150 that is operatively associated with and forms part of the refrigerant vapor compression system 100. As shown in the depicted embodiment, the controller 150 may include a microprocessor 154 and its associated memory 156, as well as an input/output interface 152 with an associated analog-to-digital converter 158. The memory 156 of controller 150 may contain operator or owner preselected, desired values for various operating parameters within the system, including, but not limited to temperature set points for various parameters within the system 100 or the climate controlled space 110, pressure limits, current limits, and any variety of other desired operating parameter set points or limits associated with the refrigeration unit or its operation. The input/output interface 152 includes various drive circuits or field effect transistors ("FETs") and relays which, under the command of the controller 150, communicate with and/or manipulate various devices in the refrigerant vapor compression system 100, including without limitation: drives motors (not shown) operatively associated with the compressor 20, the condenser fan(s) 34 associated with the condenser heat exchanger coil 32, and the evaporator fan(s) 44 associated with the evaporator heat exchanger coil 42; various valves, such as the compressor unloader valve 25, the economizer expansion device 50, and the economizer solenoid valve 63; and various pressure sensors, for example pressure transducers, and temperature sensors such as a compressor discharge pressure transducer 101, a compressor suction pressure transducer 103, an evaporator pressure transducer 105, a compressor discharge temperature sensor 107, an evaporator outlet refrigerant temperature sensor 109, a box air temperature sensor 113, a humidity sensor 115, an ambient air sensor 117, a return air sensor 119 and such other sensors as desired.

The controller 150 is configured to operate the refrigerant vapor compression system 100 to maintain a temperature and humidity controlled environment within the climate controlled space 110, which in the embodiment described herein constitutes the cargo box of the truck, trailer or container wherein the product is stored. As in conventional practice, the controller 150 maintains a predetermined box temperature, T_{SPACE}, by selectively controlling the operation of the compressor 20, the condenser fan(s) 34 associated with the condenser heat exchanger coil 32, and the evaporator fan(s) 44 associated with the evaporator heat exchanger coil 42, as well as selectively opening or closing the compressor unloader valve 25 and the economizer solenoid valve 63.

In operation, when the temperature of the product within the space 110 is above a predetermined temperature, for example when the product has been loaded into the box in a "hot" condition, such as produce loaded directly from the field, the controller 150 will operate the refrigerant vapor compression system in a pull-down mode so as to provide maximum or near maximum cooling capacity to rapidly pull-down the temperature, T_{SPACE}, of climate-controlled space 110 to a temperature within a preset tolerance, ΔT, typically about 0.25°C (0.45°F), of a desired set point temperature, T_{SP}, that represents the desired temperature at which the product loaded into the box is to be transported. Typically, in the pull-down mode, the controller 150 will energize the economizer solenoid valve 63 to position the solenoid valve 63 in its open position, thereby permitting refrigerant to flow from refrigerant line 4 through refrigerant line 8 pass through the second pass 64 of the economizer 60 so as to increase the cooling capacity of the system. The controller 150 monitors the temperature, T_{SPACE}, of climate-controlled space 110 by means of one or more temperature sensors 113 disposed within the climate controlled space 110 at one or more locations. The temperature sensors 113 may be thermostat type sensors, thermister type sensors or other types of temperature sensing devices.

When the sensed temperature indicates that the temperature, T_{SPACE}, within the enclosed space 110 has been pulled down to the set point temperature, T_{SP}, the controller 150 will switch operation of the refrigerant vapor compression system 100 from the "pull-down" mode" into an "equilibrium" mode to maintain the temperature, T_{SPACE}, within the enclosed space 110 stable at the set point temperature, T_{SP}, that is at a temperature within a temperature range from T_{SP} - ΔT to T_{SP} + ΔT, inclusive of the end points. In this mode, the controller 150 maintains the predetermined box temperature, T_{SPACE}, by selectively controlling the operation of the compressor 20, the condenser fan(s) 34 associated with the condenser heat exchanger coil 32, and the evaporator fan(s) 44 associated with the evaporator heat exchanger coil 42, as well as selectively opening or closing the compressor unloader valve 25 and the economizer solenoid valve 63, in various schemes.

When the refrigerant vapor compression system is operating in the "equilibrium" mode with the temperature, T_{SPACE}, lying within the equilibrium range of equal to or greater than T_{SP} - ΔT and equal to or less than T_{SP} + ΔT, the controller 150 will enter a humidity control mode in which the controller 150 monitors the relative humidity, RH_{SPACE}, by means of a humidity sensor 115, such as for example a humidistat or other type of humidity sensing device, disposed to sense a relative humidity reflective of the relative humidity with the climate controlled space 110. The humidistat 115 may be disposed in the flow of supply air being delivered to the climate controlled space 110 downstream of the airside outlet of the evaporator heat exchanger 42 as depicted in FIG. 1, or one or more humidity sensors may be disposed at selected locations within the climate-controlled space 110 and connected in operative communication with the controller 150 to transmit a signal indicative of the relative humidity in the vicinity of the humidity sensor. The controller 150 will compare the sensed relative humidity, RH_{SPACE}, to a desired set point relative humidity, RH_{SP}. The controller 150 may be programmed to make the relative humidity comparison periodically at a specified time interval. The controller 150 selects the desired set point relatively humidity, RH_{SP}, based upon the set point temperature, T_{SP}. For example, the controller 150 may determine the desired set point relative humidity using an algorithm preprogrammed into the microprocessor of the controller 150 that calculates the optimal relative humidity at the set point temperature for the particular product or class of the particular product loaded into the space 110. Alternatively, the controller 150 may select the desired relative humidity set point from one or more maps of relative humidity versus temperature preprogrammed into the memory bank of the controller 150.

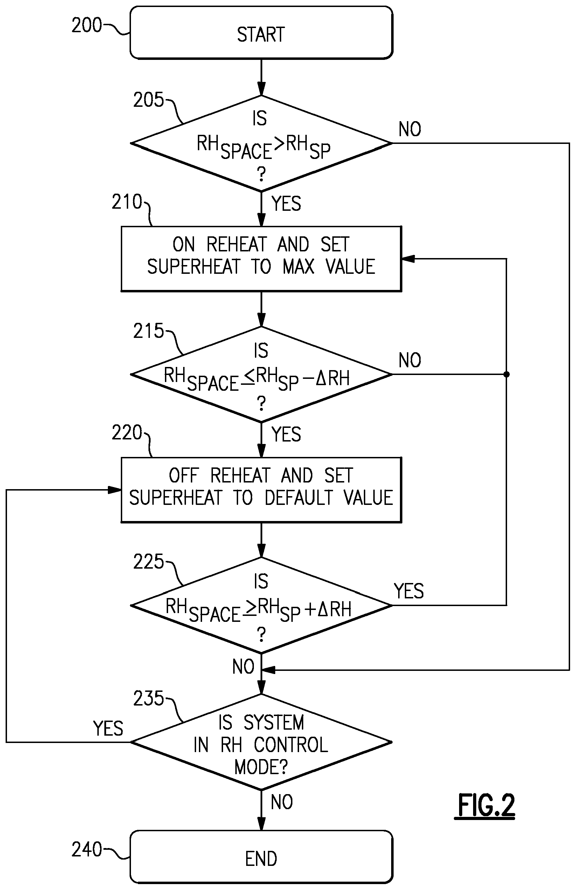

Referring now to FIG. 2, after the controller 150 initiates operation of the refrigeration unit in the humidity control mode at step 200, the controller 150 will, at step 205, compare the sensed relative humidity, RH_{SPACE}, to the desired relative humidity set point RH_{SP}, to determine whether the sensed relative humidity, RH_{SPACE}, is greater than the desired relative humidity set point, RH_{SP}. If not, the controller 150 will check, at step 235, whether the system 100 is to remain in the humidity control mode. If the controller 150 verifies that the system is to remain in the humidity control mode, the controller will periodically check, at step 225, so long as the system 100 remains operating in the humidity control mode, whether the sensed relative humidity, RH_{SPACE}, is greater than or equal to the desired relative humidity set point plus a relative humidity tolerance, that is RH_{SP} + ΔRH, where ΔRH is the relative humidity tolerance, a preselected value typically, for example but not limited to, of about 2 degrees. If the controller 150 finds, at step 235, that the system is to no longer remain in the humidity control mode, the controller will simply exit the humidity control mode at step 240.

However, if, at step 205, the sensed relative humidity within the climate controlled space 110 is indeed greater than the desired relative humidity set point, the controller 150 will enter a dehumidification mode. Upon entering the dehumidification mode, at step 210, the controller 150 will generate and transmit a command signal to the expansion device 50, disposed in refrigerant line 4 downstream with respect to refrigerant flow of the economizer 60 and upstream with respect to the refrigerant inlet to the evaporator heat exchanger 42 of the evaporator 40, to raise the superheat level of the refrigerant vapor leaving the evaporator heat exchanger 42 by causing the refrigerant flow area through the electric expansion valve 50 to further close. For example, the controller 150 will, at step 210, transit a command signal to the expansion device 50 setting the superheat level to its maximum value, thereby closing the flow area through the expansion device 50 to a minimum open area. Reducing the flow area opening within the expansion device 50 causes a further restricting of the flow of refrigerant through the expansion device 50 which results in a lower refrigerant flow and a lower refrigerant pressure within the evaporator heat exchanger 42.

As a result of the drop in refrigerant pressure, the temperature of the refrigerant passing through the evaporator heat exchanger 42 also drops to a lower temperature. As a result of the lower temperature of the refrigerant passing through the tubes of the evaporator heat exchanger 42, the surface temperature of the outer surface of the tubes of the evaporator heat exchanger 42 also decreases. Because the outer surface temperature of the refrigerant conveying tubes of the evaporator heat exchanger 42 is now colder and the temperature difference between the airflow circulating from the climate controlled space 110, which remains at the set point temperature, T_{SP}, is now greater, more moisture contained in that airflow will condense out of the airflow onto the outer surface of the tubes as the airflow passes over the outer surface of the tubes of the evaporator heat exchanger 42, thereby removing moisture from the airflow. As a result, the supply airflow, that is the airflow being supplied back to the climate controlled space 110 after having traversed the evaporator 40, will have a lower moisture content than the return airflow, that is the airflow drawn from the climate controlled space to be passed through the evaporator 40.

Additionally, the supply airflow leaving the airside outlet of the evaporator 40 will have a lower temperature due to the increased heat transfer from the air flow to the colder refrigerant as the air flow traverses the evaporator heat exchanger 42 in heat exchange relationship with the colder refrigerant. Therefore, at step 210, the controller 150 will also initiate reheat of the supply air flow leaving the air side outlet of the evaporator 40 by activating an air reheater 70 operatively associated with the evaporator 40. The air reheater 70 heats the supply airflow having traversed the evaporator heat exchanger 42 prior to delivery back to the climate controlled space 110. The air reheater 70 may comprise an electric heater, a hot refrigerant air heater coil, or other type of means for adding sensible heat to the air flow. The air reheater 70 may be disposed at the air side outlet of the evaporator 40 downstream of the evaporator heat exchanger 42 whereby the supply air flow having traversed the evaporator heat exchanger 42 is heated prior to entering the climate controlled space 110.

Without reheating the airflow during the dehumidification mode, the amount of dehumidification attainable is limited in that temperature of the airflow traversing the evaporator heat exchanger 42 could not be reduced lower than the set point temperature. However, with reheating available, the controller 150 can allow the temperature of the airflow having traversed the evaporator heat exchanger 42 to drop below the set point temperature so as to achieve increased condensation of moisture from the airflow since the reheater 70 may be operated to raise the temperature of the airflow up to the set point temperature prior to the airflow passing back into the climate controlled space. Thus, the controller 150 may maintain the superheat setting of the electronic expansion valve 50 at the maximum superheat setting without worrying that the temperature of the airflow has dropped below the set point temperature. Rather, the controller 150 may maintain the superheat setting of the electronic expansion valve 50 at the maximum superheat setting so long as the temperature of the refrigerant passing through the evaporator heat exchanger 42 drops so low that the temperature of the surface of the evaporator heat exchanger 42 exposed to condensation of moisture from the airflow is so low as to result in the rapid build-up of frost on the exposed surface of the evaporator heat exchanger 42. Therefore, lower levels of relative humidity may be attained when desired, such as when the climate controlled space is the cargo box of a truck, trailer or container wherein a cargo such as flower bulbs is being transported.

Over a period of time of operation in this enhanced dehumidification mode, the relative humidity will necessarily drop to the set point relative humidity, RH_{SP}. Therefore, at selected time intervals during operation in the enhanced dehumidification mode, the controller 150 will, at step 215, repeatedly compare the sensed relative humidity, RH_{SPACE}, to the relative humidity set point, RH_{SP}, minus the preselected relative humidity tolerance, ΔRH, to determine whether the sensed relative humidity, RH_{SPACE}, has dropped to a level that is equal to or less than the desired relative humidity set point minus the relative humidity tolerance, that is, RH_{SP} - ΔRH. If not, the controller 150 continues operation in the dehumidification mode with the reheater 70 activated and the superheat setting of the expansion device 50 set at maximum superheat.

If the sensed relative humidity, RH_{SPACE}, has indeed dropped to a level that is equal to or less than the desired relative humidity set point minus the relative humidity tolerance, that is, RH_{SP} - ΔRH, the controller 150, at step 220, terminates reheat by deactivating the reheater 70 and resetting the superheat setting of the electronic expansion valve 50 to a preprogrammed default value, and thence proceeds to step 225. At this point, the controller 150 periodically checks, so long as the system remains operating in the humidity control mode, whether the sensed relative humidity, RH_{SPACE}, is greater than or equal to the desired relative humidity set point plus a relative humidity tolerance, that is RH_{SP} + ΔRH. If no, and the controller 150 checks, at step 235, whether the system remains operating in a humidity control mode. If no, the controller 150 will simply exit the dehumidification mode at step 240. If yes, the controller 150 will continue operation in the dehumidification mode by repeating steps 220 and 235, in succession, and return to the dehumidification cycle at step 210 if and when the sensed relative humidity, RH_{SPACE}, again exceeds the desired relative humidity set point plus a relative humidity tolerance, that is RH_{SP} + ΔRH.

As noted previously, if the temperature of the refrigerant passing through the evaporator heat exchanger 42 drops too low, the temperature of the surface of the evaporator heat exchanger coil exposed to condensation of moisture from the airflow, the rapid build-up of frost could occur. Therefore, during operation in the dehumidification mode, the controller 150 will, at regular intervals, check the evaporator outlet pressure sensed by the evaporator outlet pressure sensor 105 against a low limit pressure value to ensure that the temperature of the evaporator heat exchanger 42 does not drop so low as to cause rapid build-up of frost on the surface of the evaporator heat exchanger 42 exposed to the airflow. In the event that the sensed evaporator outlet temperature does drop below the lower limit pressure value, the controller 150 will gradually reduce the superheat setting of the evaporator expansion valve 50 from its maximum superheat setting value until the controller 150 determines that the sensed evaporator outlet pressure again rises above the lower limit pressure value. The controller 150 will maintain the superheat setting of the electronic expansion valve 50 at this reduced superheat setting valve for the remainder of the dehumidification mode so long as the sensed evaporator outlet pressure does not again drop below the lower limit pressure value.

In an embodiment, the evaporator fans 44 may be variable speed fans having a variable speed motor/drive that is capable of operating at a lower speed setting and at a higher speed setting. The controller 150 controls the supply of electrical power to the fan motor/drive (not shown) associated with each evaporator fan 44 in a conventional manner, for example by controlling the frequency or the current output of the electrical power supply, to selectively operate the evaporator fan or fans 44 at either the lower speed setting or the higher speed setting. At the lower speed setting, the evaporator fan or fans 44 draw airflow from the climate controlled space 110 and pass the airflow over the refrigerant conveying conduits 45 of the evaporator heat exchanger 44 at a lower volume flow rate lower than the volume flow rate produced when the evaporator fan or fans 44 are operating at the higher speed setting. To further enhance the dehumidification process, the controller 150 may selectively operate the variable speed evaporator fan(s) 44 at the lower speed setting to reduce the volume flow rate of the airflow passed through the evaporator 40 in heat exchange relationship with the refrigerant passing through the refrigerant conveying conduits 45 of the evaporator heat exchanger 42. By operating at a lower volume flow rate of airflow through the evaporator 40, the range of dehumidification will potentially be extended as the airflow will take more time to traverse the evaporator heat exchanger 42, allowing more moisture to condense. Similarly, the capability to reheat the airflow by means of the reheater 70 is also potentially enhanced as the airflow will take more time to traverse the reheater 70.

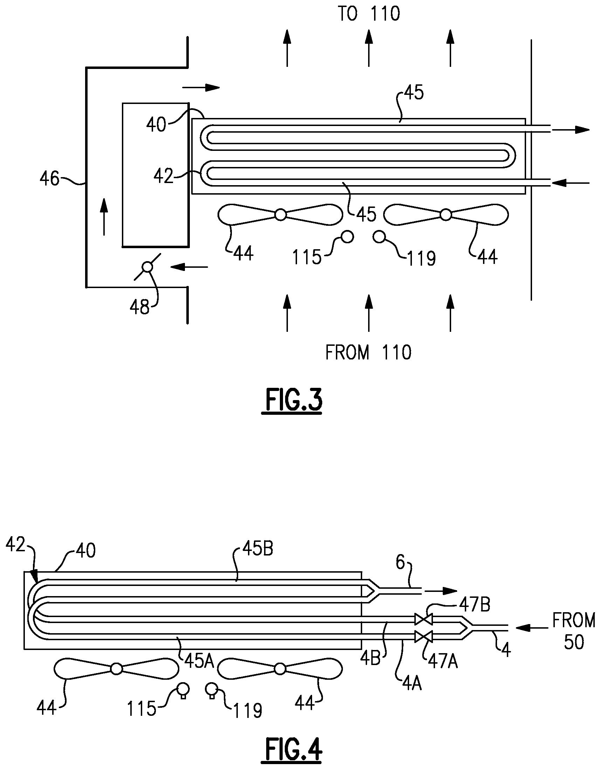

Referring now to FIG. 3, the dehumidification of the airflow passing through the evaporator heat exchanger 42 may also be enhanced by bypassing a portion of the air drawn by the evaporator fan(s) 44 from the climate controlled space 110 through bypass duct 46 around the evaporator 40 and reintroducing that bypassed airflow into the airflow having passed through the evaporator 40 downstream of the airside outlet of the evaporator heat exchanger 42. A bypass damper 48, whose positioning may be selectively controlled by the controller 150, may be provided in the bypass duct 46 to control the portion of airflow bypassing the evaporator 40. Due to the bypassing of a portion of the airflow, a lower volume of airflow passes at a lower flow rate through the evaporator 40 in heat exchange relationship with the refrigerant passing through the refrigerant conveying conduits 45 of the evaporator heat exchanger 42, therefore more moisture can condense from that airflow and the dehumidification of that airflow is increased. Additionally, because the bypassed airflow does not pass in heat exchange relationship with the refrigerant, the bypassed airflow remains at the return air temperature. Therefore, when reintroduced into the airflow having traversed the evaporator heat exchanger 42 assists in reheating the airflow having traversed the evaporator heat exchanger 42.

Referring now to FIG. 4, the dehumidification of the airflow passing through the evaporator heat exchanger 42may also be enhanced by segmenting the evaporator heat exchanger into two (or more, if desired) separate sets 45A and 45B of refrigerant conveying conduits and selectively controlling the flow of refrigerant through the sets 45A and 45B of refrigerant conveying conduits independently of each other. As depicted in FIG. 4, the refrigerant flow having traversed the evaporator expansion device 50 and passing through refrigerant line 4 is split into two portions, one of which flows via branch line 4A through the first set 45A of refrigerant conveying conduits and the other of which flows via branch line 4B through the second set 45B of refrigerant conveying conduits. Branch lines 4A and 4B rejoin at the refrigerant side outlet of the evaporator 40 and the refrigerant passes into refrigerant line 6. Flow control valves 47A and 47B, which may be simple two position, open/closed solenoid valves, are interdisposed in branch lines 4A and 4B, respectively, upward of the sets 45A and 45B, respectively, of refrigerant conveying conduits. Each of the flow control valves 47A and 47B are operatively associated with and independently selectively opened or closed by the controller 150. When operating in a dehumidification mode, to enhance dehumidification, the controller 150 may selectively close one of the flow control valves 47A, 47B, thereby causing all of the refrigerant flow having traversed the evaporator expansion device 50 to flow through only one of the sets 45A or 45B of the refrigerant conveying conduits. In effect, the closing to refrigerant flow of one of the sets of refrigerant conveying conduits reduces the effective heat transfer surface of the evaporator heat exchanger which results in reducing the heat transfer capability of the evaporator heat exchanger. This in turn results in operation of the heat exchanger at a lower refrigerant saturation temperature and thereby increases condensation of moisture from the airflow passing through the evaporator, thus increasing dehumidification.

The terminology used herein is for the purpose of description, not limitation. Specific structural and functional details disclosed herein are not to be interpreted as limiting, but merely as basis for teaching one skilled in the art to employ the present invention. While the present invention has been particularly shown and described with reference to the exemplary embodiments as illustrated in the drawing, it will be recognized by those skilled in the art that various modifications may be made without departing from the scope of the invention. Those skilled in the art will also recognize the equivalents that may be substituted for elements described with reference to the exemplary embodiments disclosed herein without departing from the scope of the present invention.

Therefore, it is intended that the present disclosure not be limited to the particular embodiment(s) disclosed as, but that the disclosure will include all embodiments falling within the scope of the appended claims.

## Claims

1. A method for controlling dehumidification of an airflow to be conditioned for supply to a climate controlled space (110), said method comprising the steps of:
passing the airflow to be conditioned over a plurality of refrigerant conveying conduits (45) of an evaporator (40) of a refrigerant vapor compression system (100) thereby cooling the airflow;
operating the refrigeration vapor compression system to maintain the airflow at a set point air temperature indicative of a desired temperature within the climate controlled space; and
adjusting an evaporator expansion device (50) so as to reduce the temperature of the refrigerant within the refrigerant conveying conduits of the evaporator whenever further dehumidification of the air flow to be conditioned is desired;
**characterised in that** the step of operating the refrigerant vapor compression system to maintain said airflow at a set point air temperature indicative of a desired temperature within the climate controlled space includes the step of reheating said airflow having passed over the plurality of refrigerant conveying conduits of the evaporator prior to supplying said airflow to the climate controlled space.

2. The method as recited in claim 1, comprising:
adjusting a superheat level of the expansion device (50) so as to further reduce the temperature of the refrigerant within the refrigerant conveying conduits (45) of the evaporator (40) thereby increasing condensation of moisture from said airflow.

3. The method as recited in claim 2 wherein the step of adjusting a superheat level of the expansion device (50) so as to further reduce the temperature of the refrigerant within the refrigerant conveying conduits (45) of the evaporator (40) comprises setting the superheat setting of the expansion device to a maximum superheat setting.

4. The method as recited in any preceding claim wherein the step of reheating said airflow having passed over a plurality of refrigerant conveying conduits (45) of the evaporator (40) prior to supplying said airflow to the climate controlled space (110) includes the steps of:
sensing a temperature of said airflow having passed over a plurality of refrigerant conveying conduits of the evaporator;
comparing the sensed temperature of said airflow to a set point temperature indicative of a desired temperature to be maintained within the climate controlled space; and
reheating said airflow to the set point temperature prior to supplying the airflow to the climate controlled space.

5. The method as recited in any preceding claim wherein the set point air temperature comprises a temperature in the range from a preselected air temperature minus a preselected tolerance to the preselected air temperature plus the preselected tolerance, inclusive of the end point air temperatures.

6. The method as recited in claim 1 or 2 wherein the step of adjusting the evaporator expansion device (50) so as to reduce the temperature of the refrigerant within the refrigerant conveying conduits (45) of the evaporator (45) is implemented if a sensed relative humidity reflective of the relative humidity within the climate controlled space (110) exceeds a desired set point relative humidity.

7. The method as recited in claim 6 wherein the set point relative humidity comprises a relative humidity in the range from a preselected relative humidity minus a preselected tolerance to the preselected relative humidity plus the preselected tolerance, inclusive of the end point relative humidities.

8. The method as recited in claim 1 wherein the step of adjusting the expansion device (50) so as to reduce the temperature of the refrigerant within the refrigerant conveying conduits (45) of the evaporator (40) comprises one of:
reducing a refrigerant flow area through the expansion device, or increasing a pressure drop in the refrigerant passing through the expansion device, or
decreasing a flow rate of refrigerant passing through the expansion device.

9. The method as recited in any preceding claim further comprising the steps of: providing a variable speed fan (44) for drawing a flow of air from the climate controlled space (110) and passing said airflow over a plurality of refrigerant conveying conduits (45) of an evaporator (40); and
operating said variable speed fan in a low speed mode during dehumidification of said airflow.

10. A method as recited in any preceding claim further comprising the step of bypassing a portion of said airflow around the evaporator (40) whereby the bypass portion does not pass in heat exchange relationship with the refrigerant flowing through the refrigerant conveying conduits (45) of the evaporator.

11. A method as recited in any preceding claim further comprising the steps of:
providing the evaporator (40) with a first set (45A) and second set (45B) of independent refrigerant conveying conduits (45); and
selectively closing one of the first set and the second set of refrigerant convening conduits to enhance dehumidification.

12. The method as recited in any preceding claim wherein the expansion device (50) is an electronic expansion valve (EXV).

13. An apparatus for supplying conditioned air to a climate controlled space (110) comprising:
a refrigerant vapor compression system (100) including a compression device (20), a refrigerant heat rejection heat exchanger (32), an electronic expansion valve (50), and an evaporator heat exchanger (42) arranged in series refrigerant flow relationship in accordance with a refrigerant vapor compression cycle;
an evaporator fan (44) for passing a flow of air to be conditioned over a plurality of refrigerant conveying conduits (45) of the evaporator heat exchanger in heat exchange relationship with the refrigerant thereby cooling the airflow flow of air to be conditioned; and
a controller (150) operatively associated with the refrigerant vapor compression system, said controller configured to operate the refrigeration vapor compression system to maintain the airflow at a set point air temperature indicative of a desired temperature within the climate controlled space, and to adjust the electronic expansion valve optionally by adjusting a superheat setting of the electronic expansion valve to a maximum superheat setting, so as to reduce the temperature of the refrigerant within the refrigerant conveying conduits of the evaporator whenever further dehumidification of the air flow to be conditioned is desired;
**characterised by** a reheater (70) for reheating said airflow having passed over the plurality of refrigerant conveying conduits of the evaporator prior to supplying said airflow to the climate controlled space.

14. The apparatus as recited in claim 13 wherein the climate controlled space (110) comprises the cargo-storage space of a truck, trailer, container or the like for transporting perishable/frozen items by truck, rail, ship or intermodally.

## Patentansprüche

1. Verfahren zum Steuern von Entfeuchtung eines Luftstroms, der zum Zuführen zu einem klimagesteuerten Raum (110) klimatisiert werden soll, wobei das Verfahren die folgenden Schritte umfasst:
Strömenlassen des zu klimatisierenden Luftstroms über eine Vielzahl von Kühlmittel transportierenden Leitungen (45) eines Verdampfers (40) eines Kühlmitteldampf-Kompressionssystems (100), wodurch der Luftstrom gekühlt wird;
Betreiben des Kühlmitteldampf-Kompressionssystems zum Halten des Luftstroms auf einer Sollwert-Lufttemperatur, die eine gewünschte Temperatur in dem klimagesteuerten Raum angibt; und
Einstellen einer Verdampfexpansionsvorrichtung (50), um die Temperatur des Kühlmittels innerhalb der Kühlmittel transportierenden Leitungen des Verdampfers zu reduzieren, wenn weitere Entfeuchtung des zu klimatisierenden Luftstroms erwünscht ist;
**dadurch gekennzeichnet, dass** der Schritt des Betreibens des Kühlmitteldampf-Kompressionssystems, um den Luftstrom auf einer Sollwert-Lufttemperatur zu halten, die eine gewünschte Temperatur innerhalb des klimagesteuerten Raums angibt, den Schritt des erneuten Erwärmens des Luftstroms beinhaltet, der über die Vielzahl von Kühlmittel transportierenden Leitungen des Verdampfers strömengelassen wird, bevor der Luftstrom dem klimagesteuerten Raum zugeführt wird.

2. Verfahren nach Anspruch 1, das Folgendes umfasst:
Einstellen eines Überhitzungspegels der Expansionsvorrichtung (50), um die Temperatur des Kühlmittels innerhalb der Kühlmittel transportierenden Leitungen (45) des Verdampfers (40) weiter zu reduzieren, wodurch Kondensierung von Feuchtigkeit aus dem Luftstrom erhöht wird.

3. Verfahren nach Anspruch 2, wobei der Schritt des Einstellens eines Überhitzungspegels der Expansionsvorrichtung (50), um die Temperatur des Kühlmittels innerhalb der Kühlmittel transportierenden Leitungen (45) des Verdampfers (40) weiter zu reduzieren, Einstellen der Überhitzungseinstellung der Expansionsvorrichtung auf eine höchste Überhitzungseinstellung umfasst.

4. Verfahren nach einem der vorhergehenden Ansprüche, wobei der Schritt des erneuten Erwärmens des Luftstroms, der über eine Vielzahl von Kühlmittel transportierenden Leitungen (45) des Verdampfers (40) strömengelassen wird, vor dem Zuführen des Luftstroms zu dem klimagesteuerten Raum (110) die folgenden Schritte beinhaltet:
Erfassen einer Temperatur des Luftstroms, der über eine Vielzahl von Kühlmittel transportierende Leitungen des Verdampfers strömengelassen wird;
Vergleichen der erfassten Temperatur des Luftstroms mit einer Sollwert-Temperatur, die eine gewünschte Temperatur angibt, die innerhalb des klimagesteuerten Raums beibehalten werden soll; und
erneutes Erwärmen des Luftstroms auf die Sollwert-Temperatur vor dem Zuführen des Luftstroms zu dem klimagesteuerten Raum.

5. Verfahren nach einem der vorhergehenden Ansprüche, wobei die Sollwert-Lufttemperatur eine Temperatur in dem Bereich von einer vorbestimmten Lufttemperatur minus einer vorbestimmten Toleranz zu der vorbestimmten Lufttemperatur plus die vorbestimmte Toleranz, einschließlich der Endpunkt-Lufttemperaturen, umfasst.

6. Verfahren nach Anspruch 1 oder 2, wobei der Schritt des Einstellens der Verdampfer-Expansionsvorrichtung (50), um die Temperatur des Kühlmittels innerhalb der Kühlmittel transportierenden Leitungen (45) des Verdampfers (45) zu reduzieren, umgesetzt wird, falls eine erfasste relative Luftfeuchtigkeit, welche die relative Luftfeuchtigkeit innerhalb des klimagesteuerten Raums (110) wiederspiegelt, eine gewünschte relative Sollwertluftfeuchtigkeit übersteigt.

7. Verfahren nach Anspruch 6, wobei die relative SollwertLuftfeuchtigkeit eine relative Luftfeuchtigkeit in dem Bereich von einer vorgewählten relativen Luftfeuchtigkeit minus einer vorgewählten Toleranz zu der vorgewählten relativen Luftfeuchtigkeit plus die vorgewählte Toleranz, einschließlich der relativen Endpunkt-Luftfeuchtigkeitswerten umfasst.

8. Verfahren nach Anspruch 1, wobei der Schritt des Einstellens der Expansionsvorrichtung (50), um die Temperatur des Kühlmittels innerhalb der Kühlmittel transportierenden Leitungen (45) des Verdampfers (40) zu reduzieren, eines der Folgenden umfasst:
Reduzieren einer Kühlmittelstromfläche durch die Expansionsvorrichtung oder Erhöhen eines Druckabfalls in dem Kühlmittel, das durch die Expansionsvorrichtung strömt, oder
Verringern einer Strömungsrate des Kühlmittels, das durch die Expansionsvorrichtung strömt.

9. Verfahren nach einem der vorhergehenden Ansprüche, das ferner die folgenden Schritte umfasst: Bereitstellen eines Gebläses (44) mit variabler Geschwindigkeit zum Entziehen eines Stroms von Luft aus dem klimagesteuerten Raum (110) und Strömenlassen des Luftstroms über eine Vielzahl von Kühlmittel transportierende Leitungen (45) eines Verdampfers (40); und
Betreiben des Gebläses mit variabler Geschwindigkeit in einem Modus niedriger Geschwindigkeit während Entfeuchten des Luftstroms.

10. Verfahren nach einem der vorhergehenden Ansprüche, das ferner den Schritt des Umgehens eines Abschnitts des Luftstroms um den Verdampfer (40) umfasst, wobei der Umgehungsabschnitt nicht in Wärmetauschverhältnis mit dem Kühlmittel tritt, das durch die Kühlmittel transportierende Leitungen (45) des Verdampfers strömt.

11. Verfahren nach einem der vorhergehenden Ansprüche, das ferner die folgenden Schritte umfasst:
Bereitstellen des Verdampfers (40) mit einem ersten Satz (45A) und zweiten Satz (45B) von unabhängigen Kühlmittel transportierenden Leitungen (45); und
selektives Schließen von einem des ersten Satzes und des zweiten Satzes von Kühlmittel transportierenden Leitungen, um die Entfeuchtung zu verbessern.

12. Verfahren nach einem der vorhergehenden Ansprüche, wobei die Expansionsvorrichtung (50) ein elektronisches Expansionsventil (EXV) ist.

13. Einrichtung zum Zuführen von klimatisierter Luft an einen klimagesteuerten Raum (110), die Folgendes umfasst:
ein Kühlmitteldampf-Kompressionssystem (100), einschließlich einer Kompressionsvorrichtung (20), eines Kühlmittel-Wärmeausstoß-Wärmetauschers (32), eines elektronischen Expansionsventils (50) und eines Verdampfer-Wärmetauschers (42), die in seriellem Kühlmittelstromverhältnis gemäß einem Kühlmitteldampf-Kompressionszyklus angeordnet sind;
ein Verdampfer-Gebläse (44) zum Strömenlassen eines Luftstroms, der klimatisiert werden soll, über eine Vielzahl von Kühlmittel transportierende Leitungen (45) des Verdampfer-Wärmetauschers in Wärmetauschverhältnis mit dem Kühlmittel, wodurch der Luftstrom Strom von Luft, der zu klimatisieren ist, gekühlt wird; und
eine Steuerung (150), die betriebswirksam mit dem Kühlmitteldampf-Kompressionssystem zusammenhängt, wobei die Steuerung dazu konfiguriert ist, das Kühlmitteldampf-Kompressionssystem zu betreiben, um den Luftstrom auf einer Sollwert-Lufttemperatur zu halten, die eine gewünschte Temperatur innerhalb des klimagesteuerten Raums angibt, und um das elektronische Expansionsventil durch Einstellen einer Überhitzungseinstellung des elektronischen Expansionsventils auf eine Höchstüberhitzungseinstellung gegebenenfalls einzustellen, um die Temperatur des Kühlmittels innerhalb der Kühlmittel transportierenden Leitungen des Verdampfers zu reduzieren, wenn weitere Entfeuchtung des zu klimatisierenden Luftstroms erwünscht ist;
**dadurch gekennzeichnet, dass** ein Nacherhitzer (70) zum erneuten Erhitzen des Luftstroms vor dem Zuführen des Luftstroms zu dem klimagesteuerten Raum über die Vielzahl von Kühlmittel transportierende Leitungen des Verdampfers strömenlässt.

14. Vorrichtung nach Anspruch 13, wobei der klimagesteuerte Raum (110) den Ladungsstauraum eines Trucks, Anhängers, Containers oder dergleichen zum Transportieren von verderblichen/gefrorenen Gegenständen mittels Truck, Bahn, Schiff oder intermodal umfasst.

## Revendications

1. Procédé de contrôle de déshumidification d'un flux d'air à conditionner à fournir à un espace à climat contrôlé (110), ledit procédé comprenant les étapes de :
l'acheminement du flux d'air à conditionner sur une pluralité de conduits de transport de fluide frigorigène (45) d'un évaporateur (40) d'un système de compression de vapeur de fluide frigorigène (100) de sorte à refroidir le flux d'air ;
la commande du système de compression de vapeur de réfrigération pour maintenir le flux d'air à une température d'air de point de consigne indicative d'une température souhaitée à l'intérieur de l'espace à climat contrôlé ; et
l'ajustement d'un dispositif de détente d'évaporateur (50) de sorte à réduire la température du fluide frigorigène à l'intérieur des unités d'acheminement de fluide frigorigène de l'évaporateur à chaque fois qu'une déshumidification du flux d'air à conditionner est souhaitée ;
**caractérisé en ce que** l'étape de commande du système de compression de vapeur de fluide frigorigène pour maintenir ledit flux d'air à une température d'air de point de consigne indicative d'une température souhaitée à l'intérieur de l'espace à climat contrôlé comprend l'étape de réchauffage dudit flux d'air ayant passé sur la pluralité de conduits de transport de fluide frigorigène de l'évaporateur avant de fournir ledit flux d'air à l'espace à climat contrôlé.

2. Procédé selon la revendication 1, comprenant :
l'ajustement d'un niveau de surchauffe du dispositif de détente (50) de sorte à réduire davantage la température du fluide frigorigène à l'intérieur des conduits de transport de fluide frigorigène (45) de l'évaporateur (40) de sorte à accroître la condensation d'humidité à partir dudit flux d'air.

3. Procédé selon la revendication 2, dans lequel l'étape d'ajustement du niveau de surchauffe du dispositif de détente (50) de sorte à réduire davantage la température du fluide frigorigène à l'intérieur des conduits de transport de fluide frigorigène (45) de l'évaporateur (40) comprend le réglage du réglage de surchauffe du dispositif de détente à un réglage de surchauffe maximale.

4. Procédé selon une quelconque revendication précédente, dans lequel l'étape de réchauffage dudit flux d'air ayant passé sur une pluralité de conduits de transport de fluide frigorigène (45) de l'évaporateur (40) avant de fournir ledit flux d'air à l'espace à climat contrôlé (110) comprend les étapes de :
la détection d'une température dudit flux d'air ayant passé sur une pluralité de conduits de transport de fluide frigorigène de l'évaporateur ;
la comparaison de la température détectée dudit flux d'air à une température de point de consigne indicative d'une température souhaitée à maintenir à l'intérieur de l'espace à climat contrôlé ; et
le réchauffage dudit flux d'air à la température de point de consigne avant de fournir le flux d'air à l'espace à climat contrôlé.

5. Procédé selon une quelconque revendication précédente, dans lequel la température d'air de point de consigne comprend une température dans la plage allant d'une température d'air présélectionnée moins une tolérance présélectionnée à la température d'air présélectionnée plus la tolérance présélectionnée, y compris les températures d'air de point limite.

6. Procédé selon la revendication 1 ou 2, dans lequel l'étape d'ajustement du dispositif de détente d'évaporateur (50) de sorte à réduire la température du fluide frigorigène à l'intérieur des conduits de transport de fluide frigorigène (45) de l'évaporateur (45) est mise en oeuvre si une humidité relative détectée reflétant l'humidité relative à l'intérieur de l'espace à climat contrôlé (110) dépasse une humidité relative de point de consigne.

7. Procédé selon la revendication 6, dans lequel l'humidité relative de point de consigne comprend une humidité relative dans la plage allant d'une humidité relative présélectionnée moins une tolérance présélectionnée à l'humidité relative présélectionnée plus la tolérance présélectionnée, y compris les humidités relatives de point limite.

8. Procédé selon la revendication 1, dans lequel l'étape d'ajustement du dispositif de détente (50) de sorte à réduire la température du fluide frigorigène à l'intérieur des conduits de transport de fluide frigorigène (45) de l'évaporateur (40) comprend l'une de :
la réduction d'une section d'écoulement de fluide frigorigène à travers le dispositif de détente, ou l'augmentation d'une chute de pression dans le fluide frigorigène passant à travers le dispositif de détente, ou la réduction d'un débit de fluide frigorigène passant à travers le dispositif de détente.

9. Procédé selon une quelconque revendication précédente, comprenant en outre les étapes de : la fourniture d'un ventilateur à vitesse variable (44) pour aspirer un flux d'air à partir de l'espace à climat contrôlé (110) et acheminer ledit flux d'air sur une pluralité de conduits de transport de fluide frigorigène (45) d'un évaporateur (40) ; et
la commande dudit ventilateur à vitesse variable à un mode à faible vitesse pendant la déshumidification dudit flux d'air.

10. Procédé selon une quelconque revendication précédente, comprenant en outre l'étape de déviation d'une partie dudit flux d'air autour de l'évaporateur (40), moyennant quoi la partie déviée ne passe pas en relation d'échange de chaleur avec le fluide frigorigène s'écoulant à travers les conduits de transport de fluide frigorigène (45) de l'évaporateur.

11. Procédé selon une quelconque revendication précédente, comprenant en outre les étapes de :
le fait de doter l'évaporateur (40) d'un premier ensemble (45A) et d'un second ensemble (45B) de conduits de transport de fluide frigorigène indépendants (45) ; et
la fermeture sélective du premier ensemble et du second ensemble de conduits de transport de fluide frigorigène pour améliorer la déshumidification.

12. Procédé selon une quelconque revendication précédente, dans lequel le dispositif de détente (50) est un détendeur électronique (EXV).

13. Appareil pour fournir de l'air conditionné à un espace à climat contrôlé (110), comprenant :
un système de compression de vapeur de fluide frigorigène (100) comprenant un dispositif de compression (20), un échangeur à de chaleur de rejet de chaleur de fluide frigorigène (32), un détendeur électronique (50), et un échangeur de chaleur d'évaporateur (42) agencés en série en relation d'écoulement de fluide frigorigène suivant un cycle de compression de vapeur de fluide frigorigène ;
un ventilateur d'évaporateur (44) pour acheminer un flux d'air à conditionner sur une pluralité de conduits de transport de fluide frigorigène (45) de l'échangeur de chaleur d'évaporateur en relation d'échange de chaleur avec le fluide frigorigène de sorte à refroidir le flux d'air à conditionner ; et
un dispositif de commande (150) fonctionnellement associé au système de compression de vapeur de fluide frigorigène, ledit dispositif de commande configuré pour commander le système de compression de vapeur de fluide frigorigène de sorte à maintenir le flux d'air à une température de point de consigne indicative d'une température souhaitée à l'intérieur de l'espace à climat contrôlé, et pour ajuster le détendeur électronique optionnellement en ajustant un réglage de surchauffe du détendeur électronique à un réglage de surchauffe maximal, de sorte à réduire la température du fluide frigorigène à l'intérieur des conduits de transport de fluide frigorigène de l'évaporateur lorsqu'une déshumidification supplémentaire du flux d'air à conditionner est souhaitée ;
**caractérisé par** un réchauffeur (70) pour réchauffer ledit flux d'air ayant passé sur la pluralité de conduits de transport de fluide frigorigène de l'évaporateur avant de fournir ledit flux d'air à l'espace à climat contrôlé.

14. Appareil selon la revendication 13, dans lequel l'espace à climat contrôlé (110) comprend l'espace de stockage de marchandises d'un camion, d'une remorque, d'un conteneur ou similaires pour transporter des articles périssables/congelés par route, rail, mer ou de manière intermodale.
